# EUROPÄISCHE PATENTANMELDUNG

(11) **EP 0 962 254 A2**
(43) Veröffentlichungstag der Anmeldung: **08.12.1999**
(21) Anmeldenummer: 99115947.6
(22) Anmeldetag: 28.03.1995
(51) Int. Cl.: B03D 1/24, C02F 1/24

(54) **Verfahren und Vorrichtung zum Abtrennen von suspendierten Stoffen aus Flüssigkeiten**

(30) Priorität: 11.04.1994 DE 4411991
(62) Teilanmeldung aus: 95915165.5
(71) Anmelder: Aventis Research & Technologies GmbH & Co. KG, 65926 Frankfurt am Main (DE)
(72) Erfinder: Bennoit, Horst, Dr., 66333 Völklingen (DE); Müller, Gerhard, Dr., 61462 Königstein (DE); Zorn, Friedhelm, Dr., 56370 Ebertshausen (DE)

(57) **Zusammenfassung**

Bei dem Verfahren zum Abtrennen von suspendierten Stoffen aus Flüssigkeiten, die in einem Begasungsreaktor vorliegen, durch Flotation (Druckentspannung) führt man die für die Flotation zu entnehmende Suspension mit einer Strömungsgeschwindigkeit ≤ 0,3 m/s gegen die natürliche Blasenaufstiegsricht, dabei begast man die Suspension zusätzlich. Die begaste Suspension entnimmt man am Boden der Begasungsvorrichtung und führt sie der Flotation zu.

## Beschreibung

Gegenstand der Erfindung ist ein Verfahren zum Abtrennen von suspendierten Stoffen aus Flüssigkeiten, die in einem Begasungsreaktor vorliegen, durch Flotation (Druckentspannung).

Gegenstand der Erfindung ist ferner eine Vorrichtung zum Durchführen des vorstehenden Verfahrens.

Es ist bekannt, den Feststoff eines aus einer Belebungsstufe abfließenden Abwassers durch Sedimentation abzutrennen. In vielen Fällen ist der Betrieb einer Sedimentation jedoch sehr störanfällig, insbesondere dann, wenn der Absetzvorgang durch zu geringe Dichteunterschiede zwischen Belebtschlamm und Wasser zu langsam verläuft. Störend auf den Sedimentationsprozess wirken in vielen Belebungsanlagen kleine Gasbläschen, die mit dem Schlammwassergemisch aus der Belebungsstufe in die Nachklärung geschleppt werden, beziehungsweise durch Entgasung infolge von Gasübersättigung oder durch biochemische Reaktionen im Nachklärbecken entstehen.

Als Alternative zur Sedimentation ist die Flotation des Feststoffes aus Schlammwassergemischen bekannt. Man unterscheidet zwei Flotationsverfahren, nämlich die Begasungsflotation und die Druckentspannungsflotation.

Bei der Begasungsflotation wird das Schlammwassergemisch in der Kontakt- und Mischzone der Flotationsanlage mit Gasblasen begast, die in der Regel Blasendurchmesser von 200-1000 µm aufweisen. Die Gasblasen lagern sich an die Schlammflocken an und ziehen die Schlammflocke an die Oberfläche. Mit Hilfe einer Räumvorrichtung wird der Schlamm entfernt. Die Begasungsflotation bereitet beim Belebtschlammverfahren Probleme, da die mit der Begasung erreichbaren Blasengrößen gegenüber den Schlammflocken in der Regel zu groß sind. Ein Anhaften dieser relativ großen Blasen an die Schlammflotte erfolgt nur partiell. Abhelfen kann man durch Zugabe von organischen Flockungsmitteln, was zusätzlich die Prozeßkosten erheblich verteuert.

Ein wesentlich besseres Blasenspektrum -kleinere Blasen- läßt sich mit der Druckentspannungsflotation erreichen. Die Gasblasen werden bei diesem Verfahren durch Entspannung einer bei hohem Druck (4 bis 6 bar) mit Luft gesättigten Flüssigkeit erzeugt und damit gleichmäßig im Schlammwassergemisch verteilt. Bei der Druckentspannungsflotation, im allgemeinen Entspannungsflottation genannt, unterscheidet man ebenfalls zwei Verfahrensvariaten, nämlich die Entspannungsflottation mit Vollstrombelüftung und die Entspannungsflottation mit Teilstrombelüftung.

Bei der Entspannungsflottation mit Vollstrombelüftung wird das vom Belebungsbecken entnommene Schlammwassergemisch bei Drücken von 0,5 bis 6 bar mit Luft gesättigt und anschließend vor der Flotationszelle entspannt. Der Nachteil dieses Verfahrens besteht neben den hohen Betriebskosten für die Sättigung mit Luft zum einen in der Verstopfungsanfälligkeit der Anlage durch den Belebtschlamm zum anderen in der Zerschlagung von Belebtschlammflocken.

Bei der Entspannungsflottation mit Teilstrombelüftung wird Frischwasser oder ein Teil des ablaufenden, gereinigten Klarwassers mit Luft bei einem Druck von 4 bis 6 bar gesättigt, mit dem Schlammwassergemisch vermischt und in einer Kontakt- und Mischzone der Flotationsanlage entspannt. Auch bei dieser Variante sind die Kosten für die Erzeugung des Druckwassers sehr hoch. Für 1 m³ Schlammwassergemisch wird bei solchen Anlagen bis zu 1 m³ Druckwasser benötigt.

Der vorliegenden Erfindung liegt demnach die Aufgabe zugrunde, ein Verfahren zu schaffen, das die Vorteile der Druckentspannungsflotation nutzt, den Energiebedarf für die Flotation jedoch in erheblichem Maße reduziert.

Die Aufgabe wird durch das Eingangs beschriebene Verfahren gelöst, bei dem man die für die Flotation zu entnehmende Suspension mit einer Strömungsgeschwindigkeit < 0,3 ms⁻¹ gegen die natürliche Blasenaufstiegsrichtung führt, dabei die Suspension zusätzlich begast, die begaste Suspension am Boden der Begasungsvorrichtung entnimmt und der Flotation zuführt.

Die Suspension kann durch Einleiten von Luft, Druckwasser oder einem Gemisch aus Mikroblasen und Wasser begast werden. Die begaste Suspension kann vor einleiten in die Flotation einer weiteren Begasung unterzogen werden.

Bei der Vorrichtung zum Durchführen des Verfahrens kann in einem Begasungsreaktor mit einer Flüssigkeitshöhe von 5 bis 30 m ein Abstromreaktor mit einem Schlankheitsgrad von Höhe zu Durchmesser (H/D) > 1, vorzugsweise 3< H/D < 30 angeordnet sein.

Der Abstromreaktor kann selbstverständlich mit gleichem Erfolg zwischen Begasungsreaktor und Flotationseinrichtung sowie in der Flotationseinrichtung selbst angeordnet sein.

Die Vorteile des erfindungsgemäßen Verfahrens sind im wesentlichen darin zu sehen, daß der Gasgehalt im Schlammwassergemisch, also in der Suspension bei minimalem Energieaufwand erheblich gesteigert werden kann. Darüber hinaus ermöglicht das Verfahren, die in der Suspension vorliegende Kohlendioxidkonzentration durch variieren der zusätzlichen Gasmenge zu beeinflußen.

Im Folgenden wird die Erfindung anhand von Beispielen näher erläutert. Bei allen Beispielen soll im Ergebnis der Feststoffgehalt im Klarwasser ≤ 30mg/l und die Schlammaufstiegsgeschwindigkeit ≥ 15 m/h sein.

### Beispiel 1

Bei einem diskontinuierlichen Flotationsversuch werden einer Abwasserreinigungsanlage mit einem Belebungsraum von 3,8 m Höhe 8 l Schlammwassergemisch mit einem pH-Wert von 6,8, einer Temperatur von 20°C und einer Biomassekonzentration von 4 g/l entnommen und nach dem bekannten Verfahren mit Druckwasser (5 bar Überdruck) gemischt. Bei einer Zumischung von 3,5 l Druckwasser (44,0 Gew.-%) wurde die geforderte Schlammaufstiegsgeschwindigkeit von ≥ 15 m/h und einer Feststoffkonzentration im Klarwasser von ≤ 30 mg/l erreicht.

### Beispiel 2

Bei einem diskontinuierlichen Flotationsversuch werden einer Abwasserreinigungsanlage mit einem Belebungsraum von 10 m Höhe am Boden 8 l Schlammwassergemisch mit einem pH-Wert von 6,8, einer Temperatur von 20°C und einer Biomassekonzentration von 4 g/l entnommen. Für die Flotation des Feststoffes werden nach dem bekannten Verfahren 2,7 l Druckwasser von 5 bar (35 Gew.-%) benötigt, um bei einer Schlammaufstiegsgeschwindigkeit von ≥ 15 m/h die geforderte Feststoffkonzentration von ≤ 30 mg/l im Klarlauf zu erhalten.

Wird das Belebtschlammwassergemisch nach dem erfindungsgemäßen Verfahren entgegen der Blasenaufstiegsrichtung über eine Vorrichtung (Abstromsäule) mit einem Schlankheitsgrad von H/D gleich 5 geleitet und dabei mit 0,6 l Luft begast, werden für die diskontinuierliche Flotation des Feststoffes nur noch 1,7 l Druckwasser von 5 bar (22 Gew.-%) benötigt. Das bedeutet, daß für das gleiche Ergebnis nur noch 60 % Druckwasser erforderlich sind.

### Beispiel 3

Bei einer kontinuierlich betriebenen biologischen Abwasserreinigungsanlage bestehend aus einem 10 m hohem Belebungstank und einer Flotationszelle mit 10 m² Oberfläche, werden dem Belebungstank 40 m³/h Schlammwassergemisch mit einem Feststoffgehalt von 4 kg Trockenmasse pro m³ entnommen und der Flotationszelle zugeführt.

Zur ausreichenden Trennung von Biomasse (≤ 30mg/l Klarwasser) und Wasser werden nach dem bekannten Verfahren dem Schlammwassergemisch 14 m³ Druckwasser von 5 bar pro Stunde zugeführt. Die Feststoffkonzentration im Klarwasser beträgt 24 mg/l und liegt somit unter der Zielvorgabe.

Wird das dem Belebungstank entnommene Schlammwassergemisch nach dem erfindungsgemäßen Verfahren entgegen der Blasenaufstiegsrichtung über eine Vorrichtung mit einer Höhe von 9 m und einem Durchmesser von 0,4 m, also einem Schlankheitsgrad H/D gleich 22,5 geführt und mit 1 m³_{N} Luft pro Stunde begast, werden für einen Feststoffgehalt 16 mg/l im Klarwasser nur noch 8 m³/h Druckwasser benötigt.

### Beispiel 4

Aus einem 20 m hohen Begasungsreaktor mit integrierter Abströmkolonne werden kontinuierlich im Seitenstrom 10 m³/h Schlammwassergemisch entnommen und einer Flotationszelle mit 2 m² Klärfläche zugeführt. Die Biomassekonzentration beträgt 3 g/l. Zur Abscheidung des Belebtschlammes innerhalb der Zielvorgabe von < 30 mg/l Feststoffkonzentration im Klarwasser werden in die Flotationszelle 1,5 m³/h Druckwasser von 5 bar eingespeist. Es werden Konzentrationen < 20 mg/l erreicht.

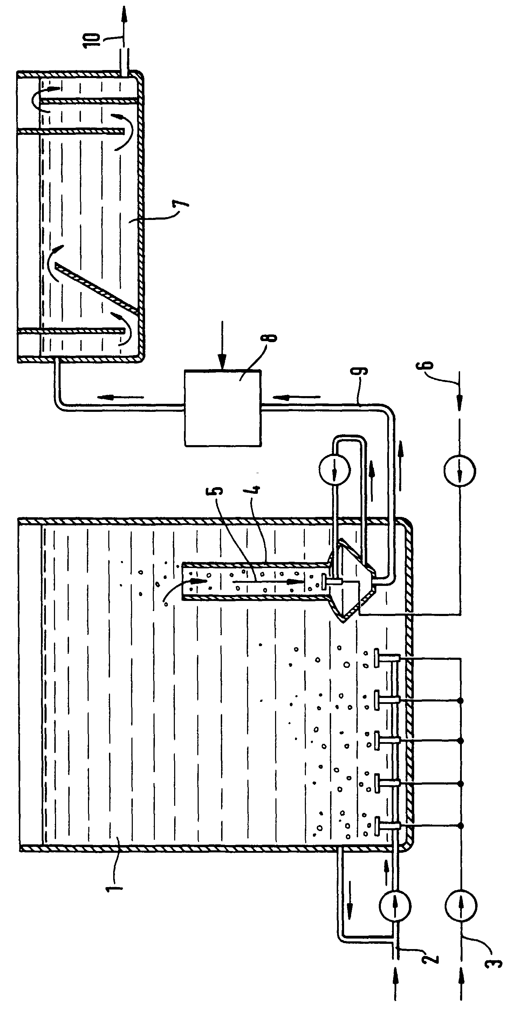

Die Figur zeigt die erfindungsgemäße Vorrichtung in beispielsweiser Ausführung schematisch dargestellt. In einem Begasungsreaktor (Belebungstank) 1 mit Abwasser- 2 und Gaseinleitung 3 ist ein Abstromreaktor 4 angeordnet. Der Pfeil 5 deutet die Richtung des Schlammwassergemisches und 6 die Luftzufuhr für die zusätzliche Begasung des Schlammwassergemisches an. Dem Begasungsreaktor 1 ist eine Flotationszelle 7 (Druckentspannungseinrichtung nicht gezeigt) angeordnet. Im vorliegenden Beispiel ist die Vorrichtung 8 zum Herstellen und Zumischen von Druckwasser zum Schlammwassergemisch in der Verbindungsleitung 9 zwischen Belebungstank 1 und Flotationszelle 7 angeordnet. 10 deutet den Klarlauf an.

Entsprechend dem erfindungsgemäßen Verfahren wird das Schlammwassergemisch über den Abstromreaktor 4 der Flotationszelle 7 zugeführt und dabei durch die Luftzufuhr 6 gleichzeitig begast. Die Strömung des Schlammwassergemisches in den Abstromreaktor 4 ist gegen die natürliche Blasenaufstiegsrichtung gerichtet, wobei die Strömungsgeschindigkeit im Bereich von 0,01 bis 0,3 m/s, vorzugsweise von 0,05 bis 0,2 m/s liegt.

## Patentansprüche

1. Verfahren zum Abtrennen von suspendierten Stoffen aus Flüssigkeiten, die in einem Begasungsreaktor vorliegen, durch Flotation (Druckentspannung), dadurch gekennzeichnet, daß man die für die Flotation zu entnehmende Suspension mit einer Strömungsgeschwindigkeit ≤ 0,3 m/s gegen die natürliche Blasenaufstiegsrichtung führt, dabei die Suspension zusätzlich begast, die begaste Suspension am Boden der Begasungsvorrichtung entnimmt und der Flotation zuführt.

2. Verfahren nach Anspruch 1, dadurch gekennzeichnet, das die Suspension durch Einleiten von Luft, von Druckwasser oder einem Gemisch aus Mikroblasen und Wasser begast wird.

3. Verfahren nach Anspruch 1 oder 2, dadurch gekennzeichnet, das man die begaste Suspension vor Einleiten in die Flotation einer weiteren Begasung unterzieht.

4. Vorrichtung zum Durchführen des Verfahrens nach Anspruch 1, dadurch gekennzeichnet, daß in einem Begasungsreaktor mit einer Flüssigkeitshöhe von 5 bis 30 m ein Abstromreaktor mit einem Schlankheitsgrad von Höhe zu Durchmesser (H/D) > 1, vorzugsweise
3 > H/D ≤ 30 angeordnet ist.
